# EUROPEAN PATENT SPECIFICATION

(11) **EP 3 344 703 B1**
(45) Date of publication and mention of the grant of the patent: **31.07.2019**
(21) Application number: 16763964.0
(22) Date of filing: 25.08.2016
(51) Int. Cl.: C08L 79/08, H01B 7/295, C08G 73/10, H01B 3/28, H01B 3/30, H01B 3/42, H01B 3/46

(54) **POLYETHERIMIDE COMPOSITIONS, METHOD OF MANUFACTURE, AND ARTICLES MADE THEREFROM**
POLYETHERIMIDZUSAMMENSETZUNGEN, VERFAHREN ZUR HERSTELLUNG UND DARAUS HERGESTELLTE ARTIKEL
COMPOSITIONS DE POLYÉTHERIMIDE, PROCÉDÉ DE FABRICATION ET ARTICLES PRÉPARÉS À PARTIR DE CES DERNIÈRES

(30) Priority: 02.09.2015 US 201562213247 P
(43) Date of publication of application: 11.07.2018
(73) Proprietor: SABIC Global Technologies B.V., 4612 PX Bergen op Zoom (NL)
(72) Inventor: SHAN, Wei, Shanghai 201319 (CN); SHEN, Liang, Shanghai 201319 (CN)
(74) Representative: Office Freylinger
(86) International application number: PCT/IB2016/055069
(87) International publication number: WO 2017/037584

(56) References cited:
- EP-A1- 0 372 310
- EP-A1- 1 318 174
- WO-A1-86/04914
- WO-A1-2008/060549
- WO-A1-2016/157096
- US-A1- 2008 223 602
- US-B2- 6 734 262

## Description

### BACKGROUND

Polyetherimides, in particular, polyetherimide-siloxane copolymers, have been used as coatings for electrical wires due to their flexibility, flame resistant properties, and high temperature stability. However, polyetherimide homopolymers have faced considerable technical limitations surrounding their use in wire coating applications, for example due to their rigidity. For some applications (e.g., electrical wires for automobiles), greater impact strength, particularly in combination with low flexural modulus and high tensile elongation is desirable. Furthermore, to be useful in some high-heat, thin-walled wire coating applications, the wire coatings further need high tear strength.

There remains a continuing need in the art for improved polyetherimide thermoplastic compositions having the desired combination of physical properties, including low flammability, high temperature stability, high impact strength, low flexural modulus, and high tensile elongation.

### BRIEF DESCRIPTION

The present invention is set out in accordance with the appended claims. A thermoplastic composition comprises 10-60 weight percent of a polyetherimide, a polyetherimide-siloxane, or a combination thereof; 35-60 weight percent of a thermoplastic polyester elastomer comprising a hard segment comprising a polyester block, and a soft segment, wherein the soft segment of the thermoplastic polyester elastomer comprises a polyether comprising a polybutylene ether, a polypropylene ether, a polyethylene ether, or a combination comprising at least one of the foregoing, preferably, a polybutylene ether; 0-20 weight percent of polyester; 0-50 weight percent of one or more flame retardants; and 0-20 weight percent of one or more additives; wherein the weight percent of each component is based on the total weight of the composition.

Another embodiment is an article comprising the thermoplastic composition, wherein the article is an extruded part, an injection molded part, or a hot compressed part.

Another embodiment is an electrical wire comprising a conductor wire and a covering disposed over the conductor wire, wherein the covering comprises the thermoplastic composition and wherein the thermoplastic composition coating the conductor wire has one or more of the following properties: a tensile elongation at break of 10 to 300% as extruded, determined according the UL-1581; a tensile stress at break of greater than 10 MPa as extruded, determined according to UL-1581; and a heat deformation of less than 50% at 175°C for 1 hour with 300 gram load, determined according to UL-1581.

Another embodiment is an article comprising the electrical wire.

The above described and other features are exemplified by the following Detailed Description.

### DETAILED DESCRIPTION

Described herein are thermoplastic compositions comprising a polyetherimide, a polyetherimide-siloxane, or a combination thereof, and a thermoplastic polyester elastomer. The inventors hereof have unexpectedly discovered that combinations comprising the above-described components can provide desirable properties, including impact strength, tensile stress at break, and tensile elongation at break. The compositions are particularly useful for the preparation of electrical wire coatings, especially for use in transportation applications such as aircrafts, trains, boats, automobiles, and the like.

One aspect of the present disclosure is a thermoplastic composition comprising a polyetherimide, a polyetherimide-siloxane, or a combination thereof. The polyetherimides comprise more than 1, for example 10 to 1000, or 10 to 500, structural units of the formula 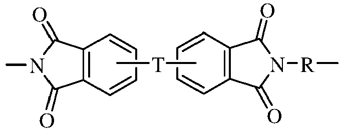 wherein each R is the same or different, and is a substituted or unsubstituted divalent organic group, such as a C₆₋₂₀ aromatic hydrocarbon group or a halogenated derivative thereof, a straight or branched chain C₂₋₂₀ alkylene group or a halogenated derivative thereof, a C₃₋₈ cycloalkylene group or halogenated derivative thereof, in particular a divalent group of the formula 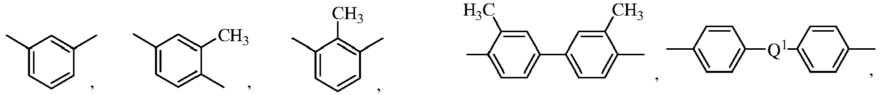 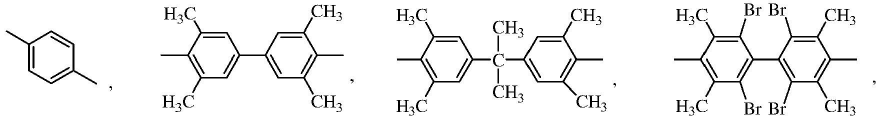 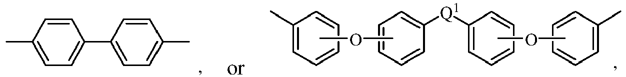 wherein Q¹ is -O-, -S-, -C(O)-, -SO₂-, -SO-, -C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In an embodiment R is m-phenylene or p-phenylene.

T is -O- or a group of the formula -O-Z-O- wherein the divalent bonds of the -O-or the -O-Z-O- group are in the 3,3', 3,4', 4,3', or the 4,4' positions. The group Z in -O-Z-O- of formula (1) is also a substituted or unsubstituted divalent organic group, and can be an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded. Exemplary groups Z include groups derived from a dihydroxy compound of the formula 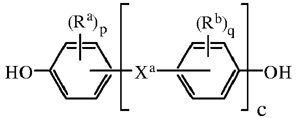 wherein R^{a} and R^{b} can be the same or different and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -SO₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of the formula 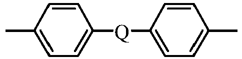 wherein Q is -O-, -S-, -C(O)-, -SO₂-, -SO-, or -C_{y}H_{2y}- wherein y is an integer from 1 to 5 or a halogenated derivative thereof (including a perfluoroalkylene group). In a specific embodiment Z is a derived from bisphenol A, such that Q in the above formula is 2,2-isopropylidene.

The polyetherimide optionally comprises up to 10 mole%, up to 5 mole%, or up to 2 mole% of units of the above formula wherein T is a tetravalent linker of the formula 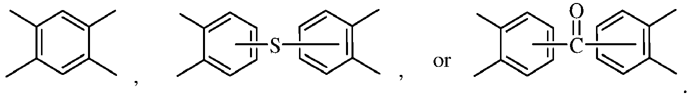 In some embodiments no units are present wherein R is of these formulas.

In some embodiments, the polyetherimide can be a polyetherimide sulfone. In some embodiments, the polyetherimides have no R groups containing sulfone groups, or no sulfone groups are present in the polyetherimide.

In an embodiment, R is m-phenylene, p-phenylene, or a combination comprising at least one of the foregoing, and T is -O-Z-O- wherein Z is a divalent group derived from the above described dihydroxy compound. In an embodiments, R is m-phenylene, p-phenylene, or a combination comprising at least one of the foregoing and T is -O-Z-O wherein Z is 4,4'-diphenylene isopropylidene.

The polyetherimide can be prepared by any of the methods well known to those skilled in the art, including the reaction of an aromatic bis(ether anhydride) of the formula 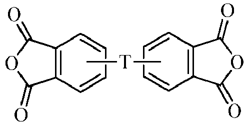 with an organic diamine of the formula

H₂N-R-NH₂

wherein T and R are defined as described above.

Illustrative examples of bis(anhydride)s include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride, as well as various combinations thereof.

Examples of organic diamines include ethylenediamine, propylenediamine, trimethylenediamine, diethylenetriamine, triethylene tetramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone, and bis(4-aminophenyl) ether. Combinations of these compounds can also be used. In some embodiments the organic diamine is m-phenylenediamine, p-phenylenediamine, sulfonyl dianiline, or a combination comprising one or more of the foregoing.

The polyetherimide can have a melt index of 0.1 to 10 grams per minute (g/min), as measured by American Society for Testing Materials (ASTM) D1238 at 340 to 370 °C, using a 6.7 kilogram (kg) weight. In some embodiments, the polyetherimide has a weight average molecular weight (M_{w}) of 1,000 to 150,000 Daltons (Da), as measured by gel permeation chromatography, using polystyrene standards. In some embodiments the polyetherimide has an M_{w} of 5,000 to 80,000 Da, specifically, 20,000 to 60,000 Da. Such polyetherimide polymers can have an intrinsic viscosity greater than 0.2 deciliters per gram (dl/g), or, more specifically, 0.35 to 0.7 dl/g as measured in m-cresol at 25 °C.

The polyetherimide-siloxane comprises polyetherimide units and polysiloxane units. The polyetherimide-siloxane comprises more than 1, for example 10 to 1000, or 10 to 500, polyetherimide structural units as described above. The polyetherimide-siloxane further comprises one or more siloxane blocks of the formula 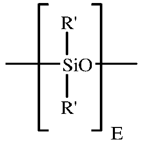 wherein each R' is independently a C₁₋₁₃ monovalent hydrocarbyl group and E can be 2 to 50, or 5 to 30, or 10 to 40. For example, each R' can independently be a C₁₋₁₃ alkyl group, C₁₋₁₃ alkoxy group, C₂₋₁₃ alkenyl group, C₂₋₁₃ alkenyloxy group, C₃₋₆ cycloalkyl group, C₃₋₆ cycloalkoxy group, C₆₋₁₄ aryl group, C₆₋₁₀ aryloxy group, C₇₋₁₃ arylalkyl group, C₇₋₁₃ arylalkoxy group, C₇₋₁₃ alkylaryl group, or C₇₋₁₃ alkylaryloxy group. The foregoing groups can be fully or partially halogenated with fluorine, chlorine, bromine, or iodine, or a combination comprising at least one of the foregoing. In an embodiment no halogens are present. Combinations of the foregoing R' groups can be used in the same copolymer. In an embodiment, the polysiloxane units comprise R' groups having minimal hydrocarbon content. In a specific embodiment, an R' group with a minimal hydrocarbon content is a methyl group.

The polyetherimide-siloxane copolymer can be a block or graft copolymer. Block polyetherimide-siloxane copolymers comprise etherimide units and siloxane blocks in the polymer backbone. The etherimide units and the siloxane blocks can be present in random order, as blocks (i.e., AABB), alternating (i.e., ABAB), or a combination thereof. Graft polyetherimide-siloxane copolymers are non-linear copolymers comprising the siloxane blocks connected to linear or branched polymer backbone comprising etherimide blocks.

The polyetherimide-siloxane copolymer can be formed by polymerization of an aromatic bisanhydride and a diamine component comprising an organic diamine as described above or mixture of diamines, and a polysiloxane diamine of the formula 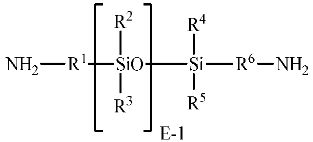 wherein R²-R⁴ are each independently a C₁₋₁₃ monovalent hydrocarbyl group and E is as described above. R¹ and R⁶ is each independently a C₂-C₂₀ hydrocarbon, in particular a C₂-C₂₀ arylene, alkylene, or arylenealkylene group. In an embodiment R¹ and R⁶ are each a C₂-C₂₀ alkyl group, specifically a C₂-C₂₀ alkyl group such as propylene, and E has an average value of 5 to 100, 5 to 75, 5 to 60, 5 to 15, or 15 to 40. Procedures for making the polysiloxane diamines of the above formula are well known in the art.

In some polyetherimide-siloxane copolymers, the diamine component can contain 10 to 90 mole percent (mol%), or 20 to 50 mol%, or 25 to 40 mol% of the polysiloxane diamine and 10 to 90 mol%, or 50 to 80 mol%, or 60 to 75 mol% of organic diamine described above. The diamine components can be physically mixed prior to reaction with the bisanhydride(s), thus forming a substantially random copolymer. Alternatively, block or alternating copolymers can be formed by selective reaction of each diamine with aromatic bisanhydride(s), to make polyimide blocks that are subsequently reacted together. Thus, the polyetherimide-siloxane copolymer can be a block, random, or graft copolymer.

In an embodiment, the polyetherimide-siloxane copolymer has units of the formula 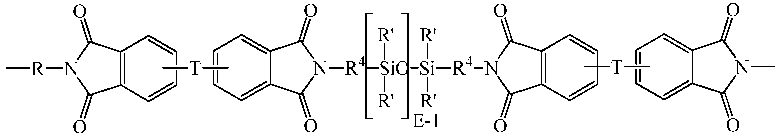 wherein R is a divalent C₂-₂₀ hydrocarbon group, each R⁴ is independently a C₂₋₂₀ divalent hydrocarbyl group, R' is each independently a C₁₋₁₃ monovalent hydrocarbyl group, E is 2 to 50, preferably 5 to 30, more preferably 10 to 40, T is -O- or a group of the formula -O-Z-O- wherein the divalent bonds of the -O- or the -O-Z-O- group are in the 3,3', 3,4', 4,3', or the 4,4' positions, Z is an aromatic C₆₋₂₄ monocyclic or polycyclic group optionally substituted with 1 to 6 C₁₋₈ alkyl groups, 1-8 halogen atoms, or a combination comprising at least one of the foregoing, and n is an integer from 5 to 100. In a specific embodiment, the R of the etherimide is a phenylene (e.g., meta-phenylene, para-phenylene, or a combination comprising at least one of the forgoing), T is -O-Z-O-, wherein Z is derived from bisphenol A, each R⁴ is propylene, E is 2 to 50, preferably 5 to 30, more preferably 10 to 40, n is 5 to 100, and each R' of the siloxane is methyl.

The relative amount of polysiloxane units and etherimide units in the polyetherimide-siloxane copolymer depends on the desired properties, and are selected using the guidelines provided herein. In particular, as mentioned above, the block or graft polyetherimide-siloxane copolymer is selected to have a certain average value of E, and is selected and used in amount effective to provide the desired weight percent of polysiloxane units in the composition. In an embodiment the polyetherimide-siloxane copolymer comprises 10 to 50 weight percent, or 10 to 40 weight percent, or 20 to 35 weight percent polysiloxane units, based on the total weight of the polyetherimide-siloxane copolymer.

In some embodiments, the polyetherimide-siloxane copolymer can have a weight average molecular weight (M_{w}) of 1,000 to 150,000 Daltons as measured by gel permeation chromatography using polystyrene standards, and can have a polysiloxane content of 10 to 50 weight percent, preferably 15 to 40 weight percent, more preferably 20 to 35 weight percent. In some embodiments, the polyetherimide-siloxane copolymer has an M_{w} of 5,000 to 80,000 Da, specifically, 55,000 to 75,000 Da, more specifically, 60,000 to 70,000 Da.

The polyetherimide, polyetherimide-siloxane, or a combination thereof can be present in the thermoplastic composition in an amount of 10 to 60 weight percent, for example, 20 to 50 weight percent, for example, 25 to 45 weight percent, for example 30 to 45 weight percent, wherein weight percent is based on the total weight of the composition.

The polyetherimide, polyetherimide-siloxane, or a combination thereof is combined, preferably blended, with a thermoplastic polyester elastomer to form a thermoplastic composition. The thermoplastic polyester elastomer (TPEE) comprises a hard segment comprising a polyester block and a soft segment comprising a polyether block, a polyester block, or a combination comprising at least one of the foregoing. In some embodiments, the TPEE comprises a hard segment comprising a polyester block and a soft segment comprising a polyether block. In some embodiments, the TPEE comprises a hard segment comprising an aromatic polyester block and a soft segment comprising an amorphous polyester block.

TPEEs generally consist essentially of "soft segment" long-chain ester units of the formula 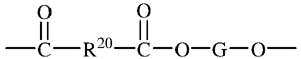 wherein G is a derived from a poly(C₁-C₄ alkylene oxide) glycol having a number-average molecular weight of 400 to 6000, and R²⁰ is derived from a C₄-C₂₄ aliphatic or aromatic dicarboxylic acid, preferably an aromatic dicarboxylic acid; and "hard segment" short-chain ester units of the formula 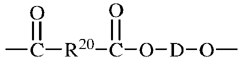 wherein D is a C₁-C₁₀ alkylene or cycloalkylene derived from the corresponding diol having a molecular weight of less than or equal to 300; and R²⁰ is derived from a C₈-C₂₄ alicyclic or aromatic dicarboxylic acid, preferably an aromatic dicarboxylic acid; with the proviso that the short-chain ester units constitute about 40% to about 90% by weight of the poly(ether-ester) block copolymer, and the long-chain ester units constitute about 10% to about 60% by weight of the poly(ether-ester) block copolymer.

In some embodiments, the hard segment of the thermoplastic polyester elastomer comprises a poly(alkylene terephthalate), a poly(alkylene Isophthalate), or a combination comprising at least one of the foregoing. In some embodiments, the soft segment of the thermoplastic polyester elastomer comprises a poly(oxyalkylene) comprising a polybutylene ether, a polypropylene ether, a polyethylene ether, or a combination comprising at least one of the foregoing. In some embodiments, the soft segment preferably comprises a polybutylene ether. In some embodiments, the soft segment of the thermoplastic polyester elastomer comprises an amorphous polyester comprising repeat units derived from a C₄₋₂₄ aliphatic carbonate, a C₄₋₂₄ aliphatic diol and a C₄₋₂₄ aliphatic dicarboxylic acid, a lactone, or a combination comprising at least one of the foregoing. In some embodiments, the soft segment of the thermoplastic polyester elastomer comprises a ring-opened polylactone, for example a poly(epsilon-caprolactone).

A variety of thermoplastic polyester elastomers are commercially available, for example under the trademarks ARNITEL EM400 and ARNITEL EL630 poly(ether-ester) copolymers from DSM; HYTREL 3078, HYTREL 4056, HYTREL 4556, and HYTREL 6356 poly(ether-ester) copolymers from DuPont; and ECDEL 9966 poly(ether-ester) copolymer from Eastman Chemical. In all cases, the soft block is derived from tetrahydrofuran. In the HYTREL 4556, HYTREL 6356, ARNITEL EM400, and ARNITEL EL630 poly(ether-ester) copolymers, the hard block is based on poly(butylene terephthalate) (PBT). In the HYTREL 4056 poly(ester-ether) copolymer, the hard block contains isophthalate units in addition to terephthalate units. In the ECDEL 9966 poly(ether-ester) copolymer, the hard block is based on poly(1,4-cyclohexanedimethanol-1,4-cyclohexane dicarboxylate) (PCCD) units. An exemplary commercially available thermoplastic polyester elastomer including a soft segment based on an amorphous polyester (e.g., a polylactone) is PELPRENE S-1002 from Toyobo Co., Ltd.

The thermoplastic polyester elastomer can be present in the thermoplastic composition in an amount of 35 to 60 weight percent, for example 40 to 55 weight percent, for example, 45 to 55 weight percent, based on the total weight of the composition.

The thermoplastic composition can optionally further comprise a polyester. "Polyester" as used herein includes polyesters, polyester copolymers, and combinations of the foregoing. Useful polyesters include, for example, polyesters having repeating units of the formula 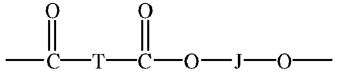 wherein J is a divalent group derived from a dihydroxy compound (including a reactive derivative thereof), and can be, for example, a C₂₋₁₀ alkylene, a C₆₋₂₀ cycloalkylene, a C₆₋₂₀ arylene, or a polyoxyalkylene in which the alkylene groups contain 2 to 6 carbon atoms, specifically 2, 3, or 4 carbon atoms; and T is a divalent group derived from a dicarboxylic acid (including a reactive derivative thereof), and can be, for example, a C₂₋₂₀ alkylene, a C₆₋₂₀ cycloalkylene, or a C₆₋₂₀ arylene. Copolyesters containing a combination of different T and J groups can be used. The polyester units can be branched or linear.

In an embodiment, J is a C₂₋₃₀ alkylene group having a straight chain, branched chain, or cyclic (including polycyclic) structure, for example ethylene, n-propylene, i-propylene, 1,4-butylene, 1,6-cyclohexylene, or 1,4-methylenecyclohexane. In another embodiment, J is derived from a bisphenol-containing moiety, for example bisphenol A. In another embodiment, J is derived from an aromatic dihydroxy compound, for example, resorcinol.

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination comprising at least one of the foregoing acids. Acids containing fused rings can also be present, such as 1,4-, 1,5-, or 2,6-naphthalenedicarboxylic acids. Specific dicarboxylic acids include terephthalic acid, isophthalic acid, naphthalene dicarboxylic acid, 1,4-cyclohexane dicarboxylic acid, or a combination comprising at least one of the foregoing acids. A specific dicarboxylic acid comprises a combination of isophthalic acid and terephthalic acid wherein the weight ratio of isophthalic acid to terephthalic acid is 91:9 to 2:98.

Specific ester units include ethylene terephthalate, n-propylene terephthalate, n-butylene terephthalate, 1,4-cyclohexanedimethylene terephthalate, and ester units derived from isophthalic acid, terephthalic acid, and resorcinol (ITR)).

The polyesters can be obtained by interfacial polymerization or melt-process condensation, by solution phase condensation, or by transesterification polymerization wherein, for example, a dialkyl ester such as dimethyl terephthalate can be transesterified with ethylene glycol using acid catalysis, to generate poly(ethylene terephthalate). A branched polyester, in which a branching agent, for example, a glycol having three or more hydroxyl groups or a trifunctional or multifunctional carboxylic acid has been incorporated, can be used. Furthermore, it can be desirable to have various concentrations of acid and hydroxyl end groups on the polyester, depending on the ultimate end use of the composition.

Useful polyesters can include aromatic polyesters, poly(alkylene esters) including poly(alkylene arylates), and poly(cycloalkylene diesters). Aromatic polyesters can have a polyester structure wherein J and T are each aromatic groups as described above. In an exemplary embodiment, useful aromatic polyesters can include poly(isophthalate-terephthalate-resorcinol) esters, poly(isophthalate-terephthalate-bisphenol A) esters, or a combination comprising at least one of these. Also contemplated are aromatic polyesters with a minor amount, e.g., 0.5 to 10 weight percent, based on the total weight of the polyester, of units derived from an aliphatic diacid and an aliphatic polyol to make copolyesters. Poly(alkylene arylates) can have a polyester structure according to formula (13), wherein T comprises groups derived from aromatic dicarboxylates, cycloaliphatic dicarboxylic acids, or derivatives thereof. Examples of specifically useful T groups include 1,2-, 1,3-, and 1,4-phenylene; 1,4- and 1,5-naphthalenes; cis- or trans-1,4-cyclohexylene; and the like. Specifically, where T is 1,4-phenylene, the poly(alkylene arylate) is a poly(alkylene terephthalate). In addition, for poly(alkylene arylate), specifically useful alkylene groups J include, for example, ethylene, 1,4-butylene, and bis-(alkylene-disubstituted cyclohexane) including cis- or trans-1,4-(cyclohexylene)dimethylene. Illustrative examples of poly(alkylene terephthalates) include poly(ethylene terephthalate) (PET), poly(1,4-butylene terephthalate) (PBT), and poly(n-propylene terephthalate) (PPT). Also useful are poly(alkylene naphthalates), such as poly(ethylene naphthalate) (PEN), and poly(butylene naphthalate) (PBN). A specifically useful poly(cycloalkylene diester) is poly(1,4-cyclohexanedimethylene terephthalate) (PCT). Combinations comprising at least one of the foregoing polyesters can also be used.

Copolymers comprising alkylene terephthalate repeating ester units with other ester groups can also be useful. Specifically useful ester units can include different alkylene terephthalate units, which can be present in the polymer chain as individual units, or as blocks of poly(alkylene terephthalates). Copolymers of this type include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s can also include poly(alkylene cyclohexanedicarboxylate)s. Of these, a specific example is poly(1,4-cyclohexane-dimethanol-1,4-cyclohexanedicarboxylate) (PCCD), having recurring units of the formula 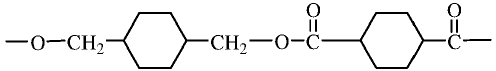 wherein, as described above, J is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

In some embodiments, the polyester comprises poly(butylene terephthalate), poly(ethylene terephthalate), or a combination comprising at least one of the foregoing.

The polyester can be present in the thermoplastic composition in an amount of 0 to 20 weight percent. When present, the polyester can be included in an amount of 5 to 15 weight percent, for example 8 to 15 weight percent, for example 10 to 15 weight percent.

The thermoplastic composition can optionally further include one or more flame retardants. In some embodiments, the one or more flame retardants include an organophosphate ester, aluminum phosphinate, aluminum oxide, aluminum oxide hydroxide, melamine polyphosphate, melamine cyanurate, magnesium hydroxide, phosphazene, or a combination comprising at least one of the foregoing. In some embodiments, the flame retardants include one or more of an organophosphate ester, an aluminum oxide hydroxide, phosphazene, or a combination comprising at least one of the foregoing. In some embodiments, the flame retardants include one or more of an aluminum oxide hydroxide, phosphazene, or a combination comprising at least one of the foregoing. The organophosphate ester can comprise bisphenol-A bis(diphenyl phosphate), resorcinol diphenyl phosphate, triphenyl phosphate, or a combination comprising at least one of the foregoing.

When present, the one or more flame retardants can be included in the composition in an amount of 0 to 50 weight percent, for example 1 to 25 weight percent, for example 1 to 15 weight percent, for example 5 to 10 weight percent, for example 5 to 7 weight percent, based on the total weight of the composition.

The thermoplastic composition can further optionally include one or more additives that are generally known in the art to be useful for thermoplastic compositions, with the proviso that the one or more additives do not significantly adversely affect one or more of the desired properties of the thermoplastic composition. For example, the additive(s) can include a thermal stabilizer, a hydrolysis stabilizer, an ultraviolet light stabilizer, a nucleating agent, a metal deactivator, a colorant, an antioxidant, or a combination comprising at least one of the foregoing additives. The additive(s) can generally be included in any amount that is known to be effective, for example 0 to 20 weight percent, for example 0.1 to 10 weight percent based on the total weight of the polymer components (e.g., the polyetherimide, polyetherimide-siloxane, or combination thereof, the polyester, and the thermoplastic polyester elastomer) and the one or more flame retardants.

Antioxidants can be compounds such as phosphites, phosphonites and hindered phenols or mixtures thereof. Phosphorus containing stabilizers including triaryl phosphite and aryl phosphonates are of note as useful additives. Difunctional phosphorus containing compounds can also be employed. Stabilizers can have a molecular weight greater than or equal to 300. In some embodiments, phosphorus containing stabilizers with a molecular weight greater than or equal to 500 are useful. Flow aids and mold release compounds are also contemplated. When present, the total amount of organic additive is more than 0 to 5 percent by weight, based on the combined weight of the polymer components. In some embodiments, the composition contains no additives.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g, dimethylbenzene phosphonate or the like), phosphates (e.g., trimethyl phosphate, or the like), or combinations comprising at least one of the foregoing heat stabilizers. The heat stabilizer can comprise tris(2,4-di-t-butylphenyl) phosphate available as IRGAPHOS™ 168. The heat stabilizer can also comprise pentaerythritol-tetrakis-(3-laurylthiopropionate). Heat stabilizers, when present, are generally used in amounts of 0.01 to 5 weight percent, or more specifically, 0.1 to 5 weight percent, based on the combined weight of the polymer components.

The thermoplastic composition can include a hindered phenolic stabilizer additive. Examples of the above compounds include 2,6-di-t-butyl-p-cresol, 2,2'-methylenebis(4-methyl-6-t-butylphenol), 4,4'-methylenebis(2,6-di-t-butylphenol), 1,1,3-tris(2-methyl-4-hydroxy-5-t-butylphenyl)butane, 4,4'-butylidenebis(3-methyl-6-t-butylphenol), 1,3-5-trimethyl-2-4,6-tris(3,5-di-t-butyl-4-hydroxybenzyl)benzene, 4,4'-thiobis(3-methyl-6-t-butylphenol), n-octadecyl-3-(4'-hydroxy-3',5'-di-t-butylphenyl)propionate, n-octadecyl-2-(4'-hydroxy-3',5'-di-t-butylphenyl)propionate, 1,6-hexanediol-bis[3-(3,5-di-t-butyl-4-hydroxphenyl)propionate], ethylenebis(oxyethylene)bis-[3-(5-tert-butyl-4-hydroxy-m-tryl) propionate], pentaerythritol tetrakis[3-(3,5-di-t-butyl-4-hydroxyphenyl)propionate], 3,9-bis[2-(3-(3-t-butyl-4-hydroxy-5-methylphenyl)-propionyloxy)-1,1-dimethylethyl]-2,4,8,10-tetraoxaspiro-[5,5]undecane, butyl-6-(3'-t-butyl-5'-methyl-2'-hydroxybenzyl)-4-methylphenylacrylate, 2-[1-(2-hydroxy-3,5-di-t-pentylphenyl)ethyl]-4,6-di-t-pentylphenylacrylate, di-n-octadecyl-3,5-di-t-butyl-4-hydroxybenzylphosphonate, N,N'-hexamethylenebis-(3,5-di-t-butyl-4-hydroxy-dihydrocinnamamide, N,N'-ethylenebis[3-(3,5-di-t-butyl-4-hydroxyphenyl)-propionamide], N,N' -tetramethylenebis[3-(3,5-di-t-butyl-4-hydroxyphenyl)-propionamide], N,N'-hexamethylenebis[3-(3,5-di-t-butyl-4-hydroxyphenyl)propionamide], N,N'-ethylenebis[3-(3-t-butyl-5-methyl-4-hydroxyphenyl)-propionamide], N,N'-hexamethylenebis-[3-(3-t-butyl-5-methyl-4-hydroxyphenyl)propionamide], N,N'-bis[3-(3,5-di-t-butyl-4- hydroxyphenyl)propionyl] hydrazine, N,N'-bis[3-(3-t-butyl-5-methyl-4-hydroxphenyl) propionyl]-hydrazine, 1,3,5-tris(3,5-di-t-butyl-4-hydroxybenzyl)isocyanurate, 1,3,5-tris(4-t-butyl-3-hydroxy-2,6-dimethylbenzyl)-isocyanurate, triethylene glycol bis(3-tert-butyl-4-hydroxy-5-methylphenyl)propionate, and the like. The hindered phenolic compounds can be used alone or in a combination comprising at least one of the foregoing. In an exemplary embodiment, the hindered phenolic stabilizer is pentaerythritol tetrakis[3-(3,5-di-t-butyl-4-hydroxyphenyl)propionate], available under the trade name Irganox 1010 from BASF. When present, the hindered phenolic stabilizer can be used in amounts of 0.01 to 5 weight percent, or more specifically, 0.1 to 5 weight percent, based on the combined weight of the polymer components.

In some embodiments, the composition comprises 0.1 to 1 weight percent of a hindered phenol, such as 2',3-bis[3-[3,5-di-tert-butyl-4-hydroxyphenyl]propionyl]proponiohydrazine sold under the trade name Irganox MD 1024 by BASF, as a metal deactivator. In some embodiments, the composition comprises 0.1 to 1 weight percent of an epoxy-functionalized styrene-acrylic copolymer, sold as Joncryl ADR 4368-F from BASF, for enhanced chemical resistance. In some embodiments, the composition comprises sodium salts of linear C₂₄-C₃₆ monocarboxylic acids, such as the sodium salt of montanic acid, sold as Licomont NaV101 from Clariant GmbH, as a nucleating agent.

The thermoplastic composition can be prepared by melt-mixing or a combination of dry blending and melt-mixing. Melt-mixing can be performed in single or twin screw type extruders or similar mixing devices which can apply a shear and heat to the components. Melt-mixing can be performed at temperatures greater than or equal to the melting temperatures of the polymer components and less than the degradation temperatures of either of the polymer components.

All of the ingredients can be added initially to the processing system. In some embodiments, the ingredients can be added sequentially or through the use of one or more master batches. It can be advantageous to apply a vacuum to the melt through one or more vent ports in the extruder to remove volatile impurities in the composition. In some embodiments the composition is the product of melt-mixing the polymers and, when present, any additives.

In an exemplary embodiment, compounding is performed using a Toshiba TEM-37BS twin screw extruder. The compositions can be injection molded using a Nissei ES3000-25E injection molding machine following drying of the compounded pellets.

Before coating onto a conductor wire as described below, the thermoplastic compositions can have a desirable combination of properties, such properties being determined in the absence of the conductor wire. The thermoplastic composition can have a flexural modulus of 150 to 2000 megaPascals (MPa), or 500 to 1600 MPa as determined by ASTM D790 at 6.4 millimeters.

The thermoplastic composition can have a tensile elongation at break of greater than or equal to 0% as determined by ASTM D638. The elongation at break can be less than or equal to 500%. Specifically, the tensile elongation at break can be greater than 0% and less than or equal to 300%, for example 10 to 100%.

The thermoplastic composition can have tensile stress at break of greater than or equal to 20 MPa, for example 25 to 50 MPa as determined by ASTM D638.

The thermoplastic composition can have a Shore D hardness of greater than 40, for example a Shore D hardness of 50 to 80, as determined according to ASTM D1238.

The thermoplastic composition can have a notched Izod impact strength of greater than or equal to 50 J/m, for example 50 to 500 J/m, for example 50 to 300 J/m, as determined according to ASTM D256 at 3.2 millimeters and at 23°C. The thermoplastic composition can have a notched Izod impact strength of greater than or equal to 30 J/m, or greater than or equal to 50 J/m. For example, the impact strength can be 30 to 300 J/m, for example 30 to 150 J/m, as determined according to ASTM D256 at 3.2 millimeters and at -30°C.

The thermoplastic compositions can be used to prepare an article. In some embodiments, the article can be an extruded part, an injection molded part, or a hot-compressed part.

In some embodiments the thermoplastic composition is extruded or otherwise molded to form an article such as a tube or a coated wire. A coated wire comprises a conductor wire and a covering disposed over the conductor wire. The covering comprises the previously described thermoplastic composition. The composition is applied to the conductor wire by a suitable method such as extrusion coating to form a coated wire. For example, a coating extruder equipped with a screw, crosshead, breaker plate, distributor, nipple, and die can be used. The melted thermoplastic composition forms a covering disposed over a circumference of the conductor wire. Extrusion coating can employ a single taper die, a double taper die, other appropriate die or combination of dies to position the conductor wire centrally and avoid die lip build up.

In some embodiments it can be useful to dry the thermoplastic composition before extrusion coating. Exemplary drying conditions are 60 to 120°C for 2 to 20 hours.

In some embodiments, during extrusion coating, the thermoplastic composition is melt filtered, prior to formation of the coating, through one or more filters. In some embodiments the thermoplastic composition has substantially no particulates greater than 80 micrometers in size, or any particulates present will be less than or equal to 40 micrometers in size. In some embodiments there will be substantially no particulates greater than 20 micrometers in size. The presence and size of particulates can be determined using a solution of 1 gram of thermoplastic composition dissolved in 10 milliliters of a suitable solvent and analyzing it using microscopy or light scattering techniques. "Substantially no particulates" is defined as having less than or equal to 3 particulates, or, more specifically, less than or equal to 2 particulates, or, even more specifically, less than or equal to 1 particulate per one gram sample. Low levels of particulates are beneficial for giving a layer of insulation on a coated wire that will not have electrically conductive defects as well as providing coatings with improved mechanical properties.

The extruder temperature during extrusion coating is generally less than the degradation temperature of the polymers. Additionally the processing temperature is adjusted to provide a sufficiently fluid molten composition to afford a covering for the conductor wire, for example, higher than the softening point of the thermoplastic composition, or more specifically at least 30°C higher than the melting point of the thermoplastic composition.

After extrusion coating the coated wire is usually cooled using a water bath, water spray, air jets or a combination comprising one or more of the foregoing cooling methods. Exemplary water bath temperatures are 20 to 90°C, or, more specifically, 80 to 90°C.

In some embodiments, the composition is applied to the conductor wire to form a covering disposed over and in physical contact with the conductor wire. Additional layers can be applied to the covering. Any methods of coating a conductor wire that are generally known can be used. In some embodiments the composition is applied to a conductor wire having one or more intervening layers between the conductor wire and the covering to form a covering disposed over the conductor wire. For instance, an optional adhesion promoting layer can be disposed between the conductor wire and covering. In another example, the conductor wire can be coated with a metal deactivator prior to applying the covering. Alternatively, a metal deactivator can be mixed with the thermoplastic composition. In another example the intervening layer comprises a thermoplastic or thermoset composition that, in some cases, is foamed.

The conductor wire can comprise a single strand or a plurality of strands. In some cases, a plurality of strands can be bundled, twisted, braided, or a combination of the foregoing to form a conductor wire. Additionally, the conductor wire can have various shapes such as round or oblong. Suitable materials for the conductor wires include, but are not limited to, copper, aluminum, lead, gold, silver, iron, nickel, chromium, and alloys comprising at least one of the foregoing metals. In an exemplary embodiment, the conductor wire is copper. The conductor wire can also comprise a coating, which can include, for example, tin, gold or silver. In some embodiments the conductor wire comprises optical fibers.

The cross-sectional area of the conductor wire and thickness of the covering can vary and is typically determined by the desired application for the coated wire. The coated wire can be used as coated wire without limitation, including, for example, for harness wire for automobiles, wire for household electrical appliances, wire for electric power, wire for instruments, wire for information communication, wire for electric cars, as well as ships, airplanes, and the like. Specific applications that can benefit from coated electrical wires comprising the thermoplastic composition are those requiring high-heat, thin-walled wire coatings, for example for high-heat train, automobile, and aircraft applications. In some specific embodiments, an article can comprise the electrical wire having a covering comprising the thermoplastic composition, wherein the article is a railway vehicle component, an automobile component, or an aircraft component.

In some embodiments the covering can have a thickness of 0.01 to 10 millimeters (mm) or, more specifically, 0.05 to 5 mm, or, even more specifically 0.1 to 1 mm.

Multiple coated wires can be combined to form a cable. The cable can comprise additional protective elements, structural elements, or a combination thereof. An exemplary protective element is a jacket which surrounds the group of coated wires. The jacket and the covering on the coated wires, singly or in combination, can comprise the thermoplastic composition described herein. A structural element is a typically non-conductive portion which provides additional stiffness, strength, shape retention capability or the like.

The thermoplastic compositions coating the conductor wires can have a number of desirable properties.

For example, the thermoplastic compositions coating the conductor wires can have a tensile stress at break of greater than or equal to 10 MPa, for example 20 to 80 MPa, determined according to UL-1581 as extruded.

The thermoplastic compositions coating the conductor wires can have a tensile elongation at break of greater than 10%, greater than 100%, for example up to 300%, determined according to UL-1581 as extruded.

The thermoplastic compositions coating the conductor wires can have a heat deformation of less than 50% at 175°C for 1 hour with a 300 gram load, determined according to UL-1581.

The thermoplastic compositions coating the conductor wires further do not exhibit cracking under bending after aging at 175°C for 240 hours.

The electrical wire achieves a pass rating in the flame propagation test conducted according to ISO 6722.

The electrical wires can be of use for any number of articles. In some embodiments, an article comprising the electrical wire is a railway vehicle component, an automobile component, a bus component, a marine vehicle component, or an aircraft component.

Advantageously, the present composition now provides for a previously unmet need for a composition comprising a polyetherimide and a thermoplastic polyester elastomer for use as an electrical wire coating. The thermoplastic compositions provided are cost-effective, and demonstrate improved physical properties, including low flammability, high temperature stability, low flexural modulus, and high tensile elongation. Therefore, a substantial improvement in thermoplastic compositions for use as electrical wire coatings is provided.

Further information is provided by the following non-limiting examples.

### EXAMPLES

Materials for the following examples are listed in Table 1.

**Table 1.**

| Abbreviation | Chemical Description | Source |
|---|---|---|
| PEI | Polyetherimide comprising structural units derived from bisphenol A dianhydride and m-phenylene diamine, and having a weight average molecular weight (M_{w}) of 44,000 Daltons (Da); CAS Reg. No. 61128-46-9; obtained as ULTEM 1010. | SABIC |
| PEI-Si | A poly(etherimide-siloxane) block copolymer having a siloxane content of 20 weight percent, based on the total weight of the block copolymer, available as SILTEM 1700. | SABIC |
| PBT | Polybutylene terephthalate, available as 1100-211X. | ChangChun Plastics |
| PET | Polyethylene terephthalate, available as BG-03-80. | Foshan Honghua Polyester Chip Co., Ltd. |
| TPEE-1 | Thermoplastic Polyester Elastomer (HYTREL 5555HS) | Du Pont China Holding Co., Ltd. |
| TPEE-2 | Thermoplastic Polyester Elastomer (HYTREL 7246) | Du Pont China Holding Co., Ltd. |
| TPEE- 3 | Thermoplastic Polyester Elastomer (ARNITEL CM622) | DSM Engineering Plastics |
| TPEE-4 | Thermoplastic Polyester Elastomer (ARNITEL CM551) | DSM Engineering Plastics |
| TPEE- 5 | Thermoplastic Polyester Elastomer (Pelprene S-1002) | Toyobo Co., Ltd. |
| BPADP | Bisphenol A bis(diphenyl phosphate), CAS Reg. No. 5945-33-5, obtained as CR-741. | Daihachi Chemical Industry Co., Ltd. (Japan) |
| PX200 | Resorcinol bis-(di-2,6-dimethylphenyl) phosphate; obtained as PX-200 | Daihachi Chemical Industry Co., Ltd. (Japan) |
| PPZ-1 | Hexaphenoxycyclophosphazene, obtained as Rabittle FP-110 | Fushimi Co. |
| PPZ-2 | Phosphazene, obtained as SPB-100 | Otsuka Chemical |
| AlOOH | Aluminum oxide hydroxide (Boehmite, surface-treated) having a particle size D10 of about 400 nanometers, D50 of about 900 nm, and D90 of about 1,700 nm; obtained as ACTILOX® 200AS1 | Nabaltech |
| Epoxy | Epoxy-functionalized styrene-acrylate copolymer (Joncryl® ADR 4368-F, hydrolytic stabilizer) | BASF |
| Mold release | High density polyethylene/polyetherimide concentrate | SABIC |
| AO-1 | Benzenepropanoic acid, 3,5-bis(1,1-dimethylethyl)-4-hydroxy-, 1,1'-[2,2-bis[[3-[3,5-bis(1,1-dimethylethyl)-4-hydroxyphenyl]-1-oxopropoxy]methyl]-1,3-propanediyl] ester (IRGANOX 1010, hindered phenolic stabilizer) | BASF |
| AO-1 | Tris(2,4-di-tert-butylphenyl) phosphite (IRGAFOS 168, phosphite stabilizer) | BASF |
| AO-3 | Pentaerythritol-tetrakis-(3-laurylthiopropionate) (SEENOX 412S, heat stabilizer) | Shipro Kasei Kaisha, Ltd. |
| MD | Metal deactivator (IRGANOX MD 1024) | BASF |

The compositions of the following examples were prepared by compounding on a Toshiba TEM-37BS twin screw extruder, and chopped into pellets following cooling in a water bath at 80-90°C. Prior to injection molding, the pellets were dried in an oven.

Articles suitable for physical testing were prepared by injection molding using a Nessei ES3000-25E injection molding machine.

Coated wire samples were also prepared, where the coating comprises the thermoplastic composition described above. The samples were prepared using a WTL EXL50 extrusion coating machine. The wire used was American Wire Gauge (AWG) 24 copper conductor wire. The wire was pre-heated at 120 to 140°C (as necessary) and subsequently extrusion coated with the thermoplastic composition at a temperature of 240-290°C, followed by hot water cooling at a temperature of 80-90°C (as necessary). The line speed was 50-100 m/min.

Physical testing of the compositions and the coated wires was conducted according to the standards summarized in Table 2. Unless indicated otherwise, all tests are the tests in effect in the year 2014.

**Table 2.**

| Property | Test Standard | Specimen Type | Units |
|---|---|---|---|
| ASTM Flexural Test (Flex. modulus) | ASTM D790 | Bar - 127 x 12.7 x 6.4 mm | MPa |
| ASTM Filled Tensile Test (Tens. stress, and elongation) | ASTM D638 | ASTM Type I Tensile bar | MPa,% |
| Notched IZOD impact strength | ASTM D256 | 3.2 millimeter thick bars | J/m |
| Shore D Hardness | ASTM D2240 | Overlap 2 Color chips 80 x 50 x 3.2 mm | - |
| Melt Flow Rate (MFR) | ASTM D1238 | Pellets; under a 5 kilogram load | g/10 min |
| Heat Distortion Temperature (HDT) | ASTM D648 | Bar - 127 x 12.7 x 3.2 mm | °C |
| Wire Heat deformation | UL-1581 | Single wire at 175°C under a 300 gram load for 1 hour | % |
| Wire Tensile test (tensile stress and tensile elongation) | UL-1581 | Single wire | MPa, % |
| Single wire flame test | ISO 6722 | Single wire | s |
| Bending | | Single wire after aging at 175°C for 240 hours | - |

For each of Examples 1-18 and Comparative Example 1, the polymer components and any additives were melt-mixed in the amounts shown in Table 3, extruded, and the compositions were characterized as described above. Results are shown in Table 4. The physical properties of coated wires were characterized following extrusion of the compositions to form a covering disposed on the surface of a copper conductor wire. The results of the wire property tests are also provided in Table 4.

Specific examples are discussed below.

### Comparative Example 1

Comparative Example 1 (CE1) is a composition comprising polyetherimide blended with a thermoplastic polyester elastomer. The composition of CE1 was prepared, molded, and tested as described above. As shown in Table 4, the various physical properties for this composition, or a wire comprising a coating comprising the composition of CE1 were not determined because of delamination.

### Examples 1-9

The thermoplastic compositions of Examples 1-9 (E1-E9) comprise a blend of a polyetherimide imide and a thermoplastic polyester elastomer, and demonstrate the physical properties of such compositions. The amount of thermoplastic polyester elastomer was varied from 40 to 50 weight percent, and the amount of polyetherimide was varied from 40 to 45 weight percent. Examples 1-3 and 5-9 each further included poly(butylene terephthalate) (E2-E3 and E5-E9) or poly(ethylene terephthalate) (E1) in an amount of 10 weight percent. The Example 1-9 compositions generally exhibited a flexural modulus greater than 1000 MPa, a tensile stress at break of greater than 32 MPa, a tensile elongation at break of greater than or equal to 10%, and a notch Izod impact strength of greater than 45 J/m. Examples 1-9 generally exhibited wire tensile stresses of 32-56 MPa, and wire tensile elongations of 18-70%. Example 4, comprising 45 wt.% PEI and 50 wt.% TPEE, and Example 8, comprising

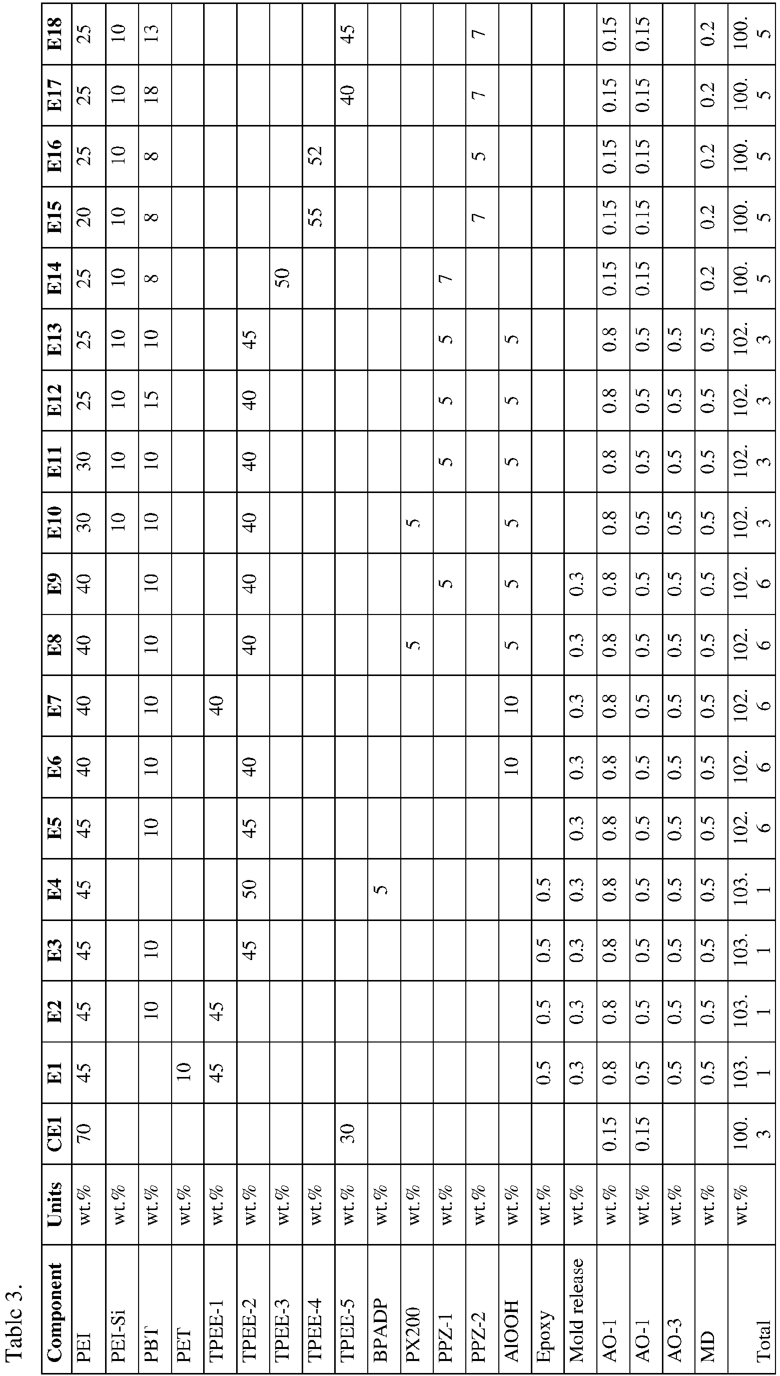

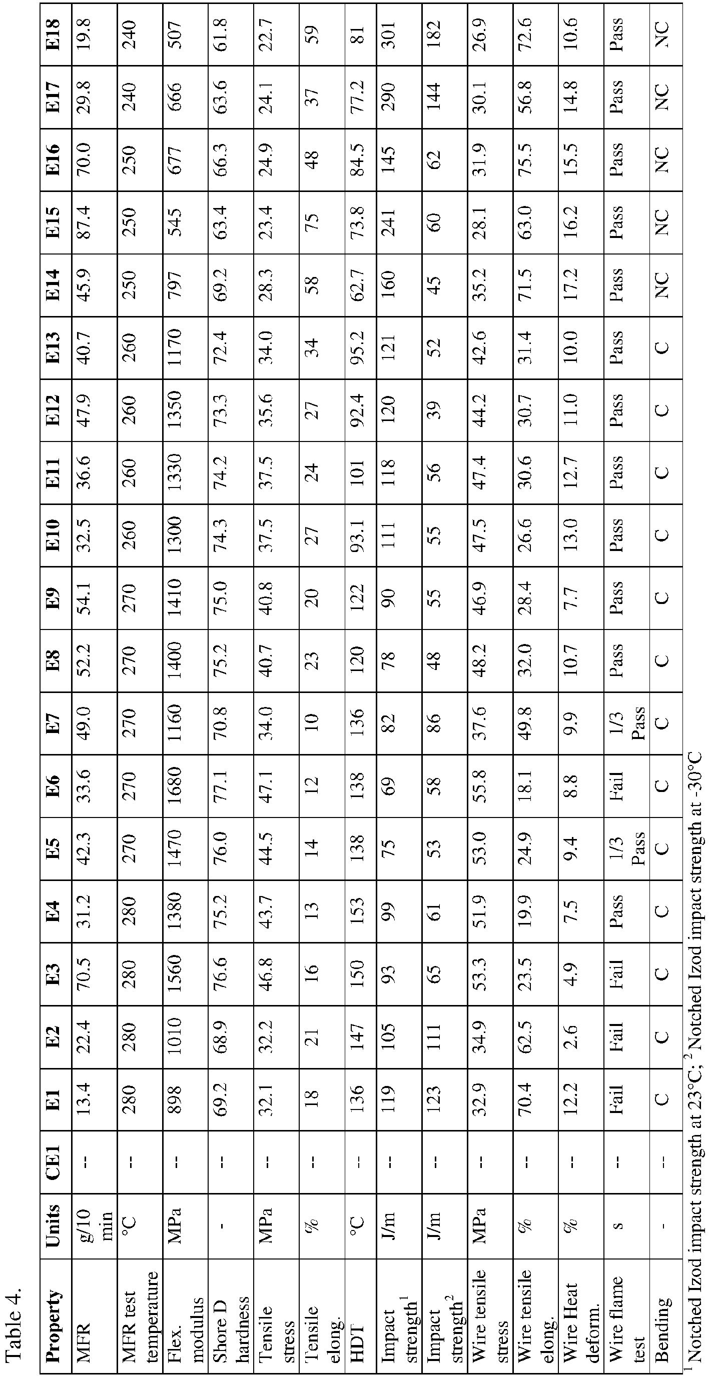

40 wt.% PEI, 10 wt.% PBT, and 40 wt.% TPEE, each passed the single wire flame test according to ISO 6722. Wires coated with the compositions of Examples 1-9 each exhibited cracking during a bend test after aging at 175°C for 240 hours.

### Examples 10-18

The thermoplastic compositions of Examples 10-18 comprise a blend of a polyetherimide imide, a polyetherimide-siloxane copolymer, a thermoplastic polyester elastomer, and a polyester. The compositions according to Examples 10-13, including 25 to 30 weight percent polyetherimide, 10 weight percent polyetherimide-siloxane, and 40 to 45 weight percent of a TPEE, demonstrated a flexural modulus of greater than 1100 MPa. The compositions according to Examples 14-16, including 20 to 25 weight percent polyetherimide, 10 weight percent polyetherimide-siloxane, 8 weight percent PBT, and 50 to 55 weight percent TPEE, demonstrated a flexural modulus of 500 to 800 MPa (compared to 898 MPa of Comparative Example 1). Examples 14-16 further exhibited improved impact strength of 145-250 J/m at 23°C, and 45 to 65 at -30°C. Example 15, including the highest amount of TPEE at 55 weight percent, achieved the lowest flexural modulus of 545 MPa. Furthermore, each of Examples 14-16 passed the single wire flame test according to ISO 6722, and wires coated with the compositions of Example 14-16 further did not exhibit cracking during a bend test after aging at 175°C for 240 hours. The coated wires of Examples 14-16 further exhibited wire tensile stresses of 28 to 36 MPa, and wire tensile elongations of 63 to 76%. The compositions of Examples 17-18, including 25 weight percent polyetherimide, 10 weight percent polyetherimide-siloxane, PBT, and TPEE, exhibited improved tensile elongation at break of 35 to 60%. The impact strength was 290 to 301 J/m at 23°C, and 144 to 182 J/m at -30°C. Example 17 exhibited a flexural modulus of 666 MPa, compared to 507 MPA for Example 18. Furthermore, each of Examples 17-18 passed the single wire flame test according to ISO 6722, and wires coated with the compositions of Example 17-18 did not exhibit cracking during a bend test after aging at 175°C for 240 hours. Examples 17-18 also exhibited wire tensile stresses of 26 to 31 MPa, and wire tensile elongations of 56 to 73%.

The thermoplastic compositions and articles made therefrom are further illustrated by the following embodiments, which are non-limiting.

Embodiment 1. A thermoplastic composition comprising, 10-60 weight percent of a polyetherimide, a polyetherimide-siloxane, or a combination thereof; 35-60 weight percent of a thermoplastic polyester elastomer comprising a hard segment comprising a polyester block, and a soft segment comprising a polyether block, an amorphous polyester block, or a combination comprising at least one of the foregoing; 0-20 weight percent of polyester; 0-50 weight percent of one or more flame retardants; and 0-20 weight percent of one or more additives; wherein the weight percent of each component is based on the total weight of the composition.

Embodiment 2. The thermoplastic composition of embodiment 1, wherein the thermoplastic composition has one or more of the following properties: a notched Izod impact strength of greater than or equal to 50 J/m as determined by ASTM D256 at 23°C; a tensile stress at break of greater than or equal to 20 MPa as determined by ASTM D638 at 23°C; and a tensile elongation at break of greater than or equal to 10% as determined by ASTM D638 at 23°C.

Embodiment 3. The thermoplastic composition of embodiments 1 or 2, wherein the polyetherimide comprises units of the formula 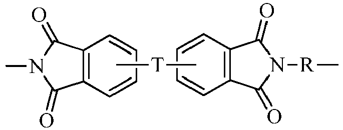 wherein R is a C₂₋₂₀ hydrocarbon group, T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic group optionally substituted with 1 to 6 C₁₋₈ alkyl groups, 1-8 halogen atoms, or a combination comprising at least one of the foregoing.

Embodiment 4. The thermoplastic composition of embodiment 3, wherein R is a divalent group of the formula 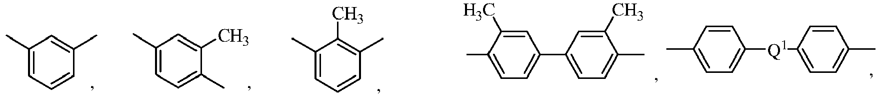 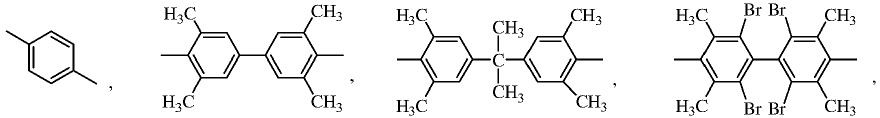 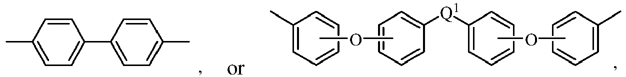 wherein Q¹ is -O-, -S-, -C(O)-, -SO₂-, -SO-, -C_{y}H_{2y}-, and a halogenated derivative thereof, wherein y is an integer from 1 to 5, or -(C₆H₁₀)_{z}- wherein z is an integer from 1 to 4; and wherein Z is a group derived from a dihydroxy compound of the formula 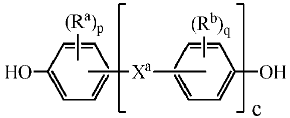 wherein R^{a} and R^{b} are each independently a halogen atom or a monovalent C₁₋₆ alkyl group; p and q are each independently 0, 1, 2, 3, or 4; c is 0 to 4; and X^{a} is a single bond, -O-, -S-, - S(O)-, -SO₂-, -C(O)-, or a C₁₋₁₈ organic bridging group.

Embodiment 5. The thermoplastic composition of embodiment 3 or 4, wherein each R is independently meta-phenylene, para-phenylene, or a combination comprising at least one of the foregoing, and the Z is 4,4'-diphenylene isopropylidene.

Embodiment 6. The thermoplastic composition of any one or more of embodiments 3 to 5, wherein at least 10 mole percent of the R groups comprise a sulfone group, preferably wherein R is 4,4'-diphenylene sulfone and Z is 4,4'-diphenylene isopropylidene.

Embodiment 7. The thermoplastic composition of any one or more of embodiments 1 to 6, wherein the polyetherimide-siloxane comprises units of the formula 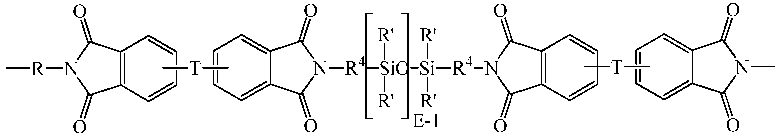 wherein each R' is independently a C₁₋₁₃ monovalent hydrocarbyl group, each R⁴ is a C₂-C₂₀ hydrocarbyl group, E of the siloxane is 2 to 50, 5, to 30, or 10 to 40; and each R and T of the imide are as in embodiment 3.

Embodiment 8. The thermoplastic composition of embodiment 7, wherein each R is independently meta-phenylene, para-phenylene, or a combination comprising at least one of the foregoing; each Z is 4,4'-diphenylene isopropylidene; each R⁴ is a propylene group; each R' is a methyl group; and E of the siloxane is 2 to 50.

Embodiment 9. The thermoplastic composition of any one or more of embodiments 1 to 8, wherein the hard segment of the thermoplastic polyester elastomer comprises a poly(alkylene terephthalate), a poly(alkylene isophthalate), or a combination comprising at least one of the foregoing.

Embodiment 10. The thermoplastic composition of any one or more of embodiments 1 to 9, wherein the soft segment of the thermoplastic polyester elastomer comprises a polyether comprising a polybutylene ether, a polypropylene ether, a polyethylene ether, or a combination comprising at least one of the foregoing, preferably, a polybutylene ether.

Embodiment 11. The thermoplastic composition of any one or more of embodiments 1 to 10, wherein the soft segment of the thermoplastic polyester elastomer comprises an amorphous polyester comprising repeat units derived from a C₄₋₂₄ aliphatic carbonate, a C₄₋₂₄ aliphatic diol and a C₄₋₂₄ aliphatic dicarboxylic acid, a lactone , or a combination comprising at least one of the foregoing, preferably wherein the polyester comprises poly(epsilon-caprolactone).

Embodiment 12. The thermoplastic composition of any one or more of embodiments 1 to 11, wherein the polyester comprises poly(butylene terephthalate), poly(ethylene terephthalate), or a combination comprising at least one of the foregoing.

Embodiment 13. The thermoplastic composition of any one or more of embodiments 1 to 12, wherein the one or more flame retardants comprise an organophosphate ester, aluminum phosphinate, melamine polyphosphate, melamine cyanurate, magnesium hydroxide, phosphazene, or a combination comprising at least one of the foregoing.

Embodiment 14. The thermoplastic composition of embodiment 13, wherein the organophosphate ester comprises bisphenol-A bis(diphenylphosphate), resorcinol diphenyl phosphate, triphenyl phosphate , or a combination comprising at least one of the foregoing.

Embodiment 15. The thermoplastic composition of any one or more of embodiments 1 to 14, wherein the one or more additives comprise a thermal stabilizer, a hydrolysis stabilizer, an ultraviolet light stabilizer, a nucleating agent, a metal deactivator, a colorant, an antioxidant, or a combination comprising at least one of the foregoing.

Embodiment 16. An article comprising the thermoplastic composition of any one or more of embodiments 1 to 15, wherein the article is an extruded part, an injection molded part, or a hot-compressed part.

Embodiment 17. An electrical wire comprising a conductor wire and a covering disposed over the conductor wire, wherein the covering comprises the thermoplastic composition of any one or more of embodiments 1 to 15; and wherein the thermoplastic composition coating the conductor wire has one or more of the following properties: a tensile elongation at break of 10 to 300% as extruded, determined according the UL-1581; a tensile stress at break of greater than 10 MPa as extruded, determined according to UL-1581; and a heat deformation of less than 50% at 175°C for 1 hour with 300 gram load, determined according to UL-15 81.

Embodiment 18. The electrical wire of embodiment 17, wherein the thermoplastic composition coating the conductor wire achieves a pass rating in the flame propagation test conducted according to ISO 6722.

Embodiment 19. The electrical wire of embodiments 17 or 18, wherein the covering comprising the thermoplastic composition does not exhibit cracking under bending after aging at 175°C for 240 hours.

Embodiment 20. The electrical wire of any one or more of embodiments 17 to 19, wherein the conductor wire comprises copper, aluminum, lead, gold, silver, iron, nickel, chromium, or an alloy comprising at least one of the foregoing, preferably copper.

Embodiment 21. The electrical wire of any one or more of embodiments 17 to 20, wherein the covering has a thickness of 0.1 to 1 millimeter.

Embodiment 22. An article comprising the electrical wire of any one or more of embodiments 17 to 21.

Embodiment 23. The article of embodiment 22, wherein the article is a railway vehicle component, an automobile component, a bus component, a marine vehicle component, or an aircraft component.

In general, the compositions, methods, and articles can alternatively comprise, consist of, or consist essentially of, any appropriate components or steps herein disclosed. The compositions, methods, and articles can additionally, or alternatively, be formulated so as to be devoid, or substantially free, of any components, materials, ingredients, adjuvants or species used in the prior art compositions or that are otherwise not necessary to the achievement of the function or objectives of the present claims.

All ranges disclosed herein are inclusive of the endpoints, and the endpoints are independently combinable with each other. "Or" means "and/or". "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. Reference throughout the specification to "another embodiment", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments.

As used herein, the term "hydrocarbyl" includes groups containing carbon, hydrogen, and optionally one or more heteroatoms (e.g., 1, 2, 3, or 4 atoms such as halogen, O, N, S, P, or Si). "Alkyl" means a branched or straight chain, saturated, monovalent hydrocarbon group, e.g., methyl, ethyl, i-propyl, and n-butyl. "Alkylene" means a straight or branched chain, saturated, divalent hydrocarbon group (e.g., methylene (-CH₂-) or propylene (-(CH₂)₃-)). "Alkenyl" and "alkenylene" mean a monovalent or divalent, respectively, straight or branched chain hydrocarbon group having at least one carbon-carbon double bond (e.g., ethenyl (-HC=CH₂) or propenylene (-HC(CH₃)=CH₂-). "Alkynyl" means a straight or branched chain, monovalent hydrocarbon group having at least one carbon-carbon triple bond (e.g., ethynyl). "Alkoxy" means an alkyl group linked via an oxygen (i.e., alkyl-O-), for example methoxy, ethoxy, and sec-butyloxy. "Cycloalkyl" and "cycloalkylene" mean a monovalent and divalent cyclic hydrocarbon group, respectively, of the formula -CₙH₂ₙ₋ₓ and - CₙH₂ₙ₋₂ₓ- wherein x is the number of cyclization. "Aryl" means a monovalent, monocyclic, or polycyclic aromatic group (e.g., phenyl or naphthyl). "Arylene" means a divalent, monocyclic, or polycyclic aromatic group (e.g., phenylene or naphthylene). The prefix "halo" means a group or compound including one more halogen (F, Cl, Br, or I) substituents, which can be the same or different. The prefix "hetero" means a group or compound that includes at least one ring member that is a heteroatom (e.g., 1, 2, or 3 heteroatoms, wherein each heteroatom is independently N, O, S, or P.

"Substituted" means that the compound or group is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g, benzyl), C₇₋₁₂ alkylarylene (e.g, toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the group, including those of the substituents.

While particular embodiments have been described, alternatives, modifications, variations, improvements, and substantial equivalents that are or can be presently unforeseen may arise to applicants or others skilled in the art. Accordingly, the appended claims as filed and as they may be amended are intended to embrace all such alternatives, modifications variations, improvements, and substantial equivalents.

## Claims

1. A thermoplastic composition comprising,
10-60 weight percent of a polyetherimide, a polyetherimide-siloxane, or a combination thereof;
35-60 weight percent of a thermoplastic polyester elastomer comprising a hard segment comprising a polyester block, and a soft segment, wherein the soft segment of the thermoplastic polyester elastomer comprises a polyether comprising a polybutylene ether, a polypropylene ether, a polyethylene ether, or a combination comprising at least one of the foregoing, preferably, a polybutylene ether;
0-20 weight percent of polyester;
0-50 weight percent of one or more flame retardants; and
0-20 weight percent of one or more additives;
wherein the weight percent of each component is based on the total weight of the composition.

2. The thermoplastic composition of claim 1, wherein the thermoplastic composition has one or more of the following properties:
a notched Izod impact strength of greater than or equal to 50 J/m as determined by ASTM D256 at 23°C;
a tensile stress at break of greater than or equal to 20 MPa as determined by ASTM D638 at 23°C; and
a tensile elongation at break of greater than or equal to 10% as determined by ASTM D638 at 23°C.

3. The thermoplastic composition of any one or more of claims 1 to 2, wherein the hard segment of the thermoplastic polyester elastomer comprises a poly(alkylene terephthalate), a poly(alkylene isophthalate), or a combination comprising at least one of the foregoing.

4. The thermoplastic composition of any one or more of claims 1 to 3, wherein the soft segment of the thermoplastic polyester elastomer comprises an amorphous polyester comprising repeat units derived from a C₄₋₂₄ aliphatic carbonate, a C₄₋₂₄ aliphatic diol and a C₄₋₂₄ aliphatic dicarboxylic acid, a lactone, or a combination comprising at least one of the foregoing, preferably wherein the polyester comprises poly(epsilon-caprolactone).

5. The thermoplastic composition of any one or more of claims 1 to 4, wherein the polyester comprises poly(butylene terephthalate), poly(ethylene terephthalate), or a combination comprising at least one of the foregoing.

6. The thermoplastic composition of any one or more of claims 1 to 5, wherein the one or more flame retardants comprise an organophosphate ester, aluminum phosphinate, melamine polyphosphate, melamine cyanurate, magnesium hydroxide, phosphazene, or a combination comprising at least one of the foregoing.

7. The thermoplastic composition of claim 6, wherein the organophosphate ester comprises bisphenol-A bis(diphenylphosphate), resorcinol diphenyl phosphate, triphenyl phosphate , or a combination comprising at least one of the foregoing.

8. The thermoplastic composition of any one or more of claims 1 to 7, wherein the one or more additives comprise a thermal stabilizer, a hydrolysis stabilizer, an ultraviolet light stabilizer, a nucleating agent, a metal deactivator, a colorant, an antioxidant, or a combination comprising at least one of the foregoing.

9. An article comprising the thermoplastic composition of any one or more of claims 1 to 8, wherein the article is an extruded part, an injection molded part, or a hot-compressed part.

10. An electrical wire comprising a conductor wire and a covering disposed over the conductor wire, wherein the covering comprises the thermoplastic composition of any one or more of claims 1 to 8; and wherein the thermoplastic composition coating the conductor wire has one or more of the following properties:
a tensile elongation at break of 10 to 300% as extruded, determined according the UL-1581;
a tensile stress at break of greater than 10 MPa as extruded, determined according to UL-1581;
a heat deformation of less than 50% at 175°C for 1 hour with 300 gram load, determined according to UL-1581; and
a pass rating in the flame propagation test conducted according to ISO 6722.

11. The electrical wire of claim 10, wherein the conductor wire comprises copper, aluminum, lead, gold, silver, iron, nickel, chromium, or an alloy comprising at least one of the foregoing, preferably copper.

12. The electrical wire of any one or more of claim 10 to 11, wherein the covering has a thickness of 0.1 to 1 millimeter, and wherein the covering comprising the thermoplastic composition does not exhibit cracking under bending after aging at 175°C for 240 hours.

13. An article comprising the electrical wire of any one or more of claims 10 to 12, wherein the article is a railway vehicle component, an automobile component, a bus component, a marine vehicle component, or an aircraft component.

## Patentansprüche

1. Thermoplastische Zusammensetzung, umfassend:
10-60 Gewichtsprozent eines Polyetherimids, eines Polyetherimid-Siloxans oder einer Kombination davon;
35-60 Gew.-% eines thermoplastischen Polyester-Elastomers, das ein Hartsegment, das einen Polyesterblock umfasst, und ein Weichsegment umfasst, wobei das Weichsegment des thermoplastischen Polyester-Elastomers einen Polyether umfasst, der einen Polybutylenether, einen Polypropylenether, einen Polyethylenether oder eine Kombination, die mindestens einen der vorstehenden umfasst, vorzugsweise einen Polybutylenether umfasst;
0-20 Gewichtsprozent Polyester;
0-50 Gewichtsprozent eines oder mehrerer Flammschutzadditive und
0-20 Gewichtsprozent eines oder mehrerer Additive;
wobei die Gewichtsprozente jeder Komponente auf das Gesamtgewicht der Zusammensetzung bezogen sind.

2. Thermoplastische Zusammensetzung nach Anspruch 1, wobei die thermoplastische Zusammensetzung eine oder mehrere der folgenden Eigenschaften aufweist:
eine Izod-Kerbschlagzähigkeit größer gleich 50 J/m, wie durch ASTM D256 bei 23 °C bestimmt;
eine Bruchspannung größer gleich 20 MPa, wie durch ASTM D638 bei 23 °C bestimmt; und
eine Bruchdehnung größer gleich 10 %, wie durch ASTM D638 bei 23 °C bestimmt.

3. Thermoplastische Zusammensetzung nach einem oder mehreren der Ansprüche 1 bis 2, wobei das Hartsegment des thermoplastischen Polyester-Elastomers ein Poly(alkylenterephthalat), ein Poly(alkylenisophthalat) oder eine Kombination, die mindestens eines der vorstehenden umfasst, umfasst.

4. Thermoplastische Zusammensetzung nach einem oder mehreren der Ansprüche 1 bis 3, wobei das Weichsegment des thermoplastischen Polyester-Elastomers einen amorphen Polyester umfasst, der Grundeinheiten umfasst, die von einem aliphatischen C₄₋₂₄-Carbonat, einem aliphatischen C₄₋₂₄-Diol und einer aliphatischen C₄₋₂₄-Carbonsäure, einem Lacton oder einer Kombination, die mindestens eines bzw. eine der vorstehenden umfasst, abgeleitet sind, vorzugsweise wobei der Polyester Poly(epsilon-caprolacton) umfasst.

5. Thermoplastische Zusammensetzung nach einem oder mehreren der Ansprüche 1 bis 4, wobei der Polyester Poly(butylenterephthalat), Poly(ethylenterephthalat) oder eine Kombination, die mindestens eines der vorstehenden umfasst, umfasst.

6. Thermoplastische Zusammensetzung nach einem oder mehreren der Ansprüche 1 bis 5, wobei das eine oder die mehreren Flammschutzadditive einen Organophosphatester, ein Aluminiumphosphinat, ein Melaminpolyphosphat, ein Melamincyanurat, ein Magnesiumhydroxid, ein Phosphazin oder eine Kombination, die mindestens einen bzw. eines der vorstehenden umfasst, umfassen.

7. Thermoplastische Zusammensetzung nach Anspruch 6, wobei der Organophosphatester Bisphenol-A-Bis(diphenylphosphat), Resorcindiphenylphosphat, Triphenylphosphat oder eine Kombination, die mindestens einen bzw. eines der vorstehenden umfasst.

8. Thermoplastische Zusammensetzung nach einem oder mehreren der Ansprüche 1 bis 7, wobei das eine oder die mehreren Additive einen Wärmestabilisator, einen Hydrolysestabilisator, einen Ultraviolettlichtstabilisator, einen Keimbildner, einen Metalldeaktivator, einen Farbstoff, ein Antioxidationsmittel oder eine Kombination, die mindestens einen bzw. eines der vorstehenden umfasst, umfasst.

9. Artikel, der die thermoplastische Zusammensetzung nach einem oder mehreren der Ansprüche 1 bis 8 umfasst, wobei der Artikel ein extrudiertes Teil, ein Spritzgussteil oder ein heiß verpresstes Teil ist.

10. Stromkabel, das einen Leitungsdraht und eine Hülle, die über dem Leitungsdraht angeordnet ist, umfasst, wobei die Hülle die thermoplastische Zusammensetzung nach einem oder mehreren der Ansprüche 1 bis 8 umfasst und wobei die thermoplastische Zusammensetzung, die den Leitungsdraht ummantelt, eine oder mehrere der folgenden Eigenschaften aufweist:
eine Bruchdehnung von 10 bis 300 % wie extrudiert, gemäß dem UL-1581 bestimmt;
eine Bruchspannung von mehr als 10 MPa wie extrudiert, gemäß UL-1581 bestimmt;
eine Wärmeverformung von weniger als 50 % bei 175 °C für 1 Stunde mit einer Last von 300 Gramm, gemäß UL-1581 bestimmt; und
eine Pass-Bewertung in der gemäß ISO 6722 durchgeführten Prüfung auf Flammausbreitung.

11. Stromkabel nach Anspruch 10, wobei der Leitungsdraht Kupfer, Aluminium, Blei, Gold, Silber, Eisen, Nickel, Chrom oder eine Legierung, die mindestens eines der vorstehenden umfasst, vorzugsweise Kupfer umfasst.

12. Stromkabel nach einem oder mehreren der Ansprüche 10 bis 11, wobei die Hülle eine Dicke von 0,1 bis 1 Millimeter aufweist und wobei die Hülle, die die thermoplastische Zusammensetzung umfasst, keine Rissbildung unter Biegen nach Alterung bei 175 °C für 240 Stunden zeigt.

13. Artikel, der das Stromkabel nach einem oder mehreren der Ansprüche 10 bis 12 umfasst, wobei der Artikel eine Schienenfahrzeugkomponente, eine Autokomponente, eine Buskomponente, eine Seefahrzeugkomponente oder eine Flugzeugkomponente ist.

## Revendications

1. Composition thermoplastique comprenant,
de 10 à 60 % en poids d'un polyétherimide, d'un polyétherimide-siloxane ou d'une combinaison de ceux-ci ;
de 35 à 60 % en poids d'un élastomère de polyester thermoplastique comprenant un segment rigide comprenant un bloc polyester, et un segment souple, dans laquelle le segment souple de l'élastomère de polyester thermoplastique comprend un polyéther comprenant un polyéther de butylène, un polyéther de propylène, un polyéther d'éthylène, ou une combinaison comprenant au moins l'un des constituants précédents, de préférence, un polyéther de butylène ;
de 0 à 20 % en poids de polyester ;
de 0 à 50 % en poids d'une ou plusieurs charges ignifugeantes ; et
de 0 à 20 % en poids d'un ou plusieurs additifs ;
dans laquelle le pourcentage en poids de chaque constituant est basé sur le poids total de la composition.

2. Composition thermoplastique selon la revendication 1, dans laquelle la composition thermoplastique possède l'une ou plusieurs des propriétés suivantes :
une résilience Izod avec entaille supérieure ou égale à 50 J/m telle que déterminée par la norme ASTM D256 à 23°C ;
une contrainte de traction à la rupture supérieure ou égale à 20 MPa telle que déterminée par la norme ASTM D638 à 23°C ; et
un allongement en traction à la rupture supérieur ou égal à 10 % tel que déterminé par la norme ASTM D638 à 23°C.

3. Composition thermoplastique selon l'une quelconque ou plusieurs des revendications 1 à 2, dans laquelle le segment rigide de l'élastomère de polyester thermoplastique comprend un polytéréphtalate d'alkylène, un polyisophtalate d'alkylène ou une combinaison comprenant au moins l'un des constituants précédents.

4. Composition thermoplastique selon l'une quelconque ou plusieurs des revendications 1 à 3, dans laquelle le segment souple de l'élastomère de polyester thermoplastique comprend un polyester amorphe comprenant des unités de répétition dérivées d'un carbonate aliphatique en C₄₋₂₄, d'un diol aliphatique en C₄₋₂₄ et d'un acide dicarboxylique aliphatique en C₄₋₂₄, une lactone ou une combinaison comprenant au moins l'un des constituants précédents, de préférence dans laquelle le polyester comprend de la poly(epsilon-caprolactone).

5. Composition thermoplastique selon l'une quelconque ou plusieurs des revendications 1 à 4, dans laquelle le polyester comprend du polytéréphtalate de butylène, du polytéréphtalate d'éthylène ou une combinaison comprenant au moins l'un des constituants précédents.

6. Composition thermoplastique selon l'une quelconque ou plusieurs des revendications 1 à 5, dans laquelle lesdites une ou plusieurs charges ignifugeantes comprennent un ester d'organophosphate, du phosphinate d'aluminium, du polyphosphate de mélamine, du cyanurate de mélamine, de l'hydroxyde de magnésium, du phosphazène ou une combinaison comprenant au moins l'un des constituants précédents.

7. Composition thermoplastique selon la revendication 6, dans laquelle l'ester d'organophosphate comprend du bisdiphénylphosphate de bisphénol A, du diphénylphosphate de résorcinol, du phosphate de triphényle ou une combinaison comprenant au moins l'un des constituants précédents.

8. Composition thermoplastique selon l'une quelconque ou plusieurs des revendications 1 à 7, dans laquelle lesdits un ou plusieurs additifs comprennent un stabilisant thermique, un stabilisant contre l'hydrolyse, un stabilisant contre la lumière ultraviolette, un agent de nucléation, un désactivateur métallique, un colorant, un antioxydant ou une combinaison comprenant au moins l'un des constituants précédents.

9. Article comprenant la composition thermoplastique selon l'une quelconque ou plusieurs des revendications 1 à 8, dans lequel l'article est une pièce extrudée, une pièce moulée par injection ou une pièce compressée à chaud.

10. Fil électrique comprenant un fil conducteur et un revêtement disposé sur le fil conducteur, dans lequel le revêtement comprend la composition thermoplastique selon l'une quelconque ou plusieurs des revendications 1 à 8 ; et dans lequel la composition thermoplastique recouvrant le fil conducteur possède l'une ou plusieurs des propriétés suivantes :
un allongement en traction à la rupture de 10 à 300 % après extrusion, déterminé selon la norme UL-1581 ;
une contrainte de traction à la rupture supérieure à 10 MPa après extrusion, déterminée selon la norme UL-1581 ;
une déformation thermique de moins de 50 % à 175°C pendant 1 heure avec une charge de 300 grammes, déterminée selon la norme UL-1581 ; et
un passage avec succès du test de propagation de flamme mené selon la norme ISO 6722.

11. Fil électrique selon la revendication 10, dans lequel le fil conducteur comprend du cuivre, de l'aluminium, du plomb, de l'or, de l'argent, du fer, du nickel, du chrome ou un alliage comprenant au moins l'un des constituants précédents, de préférence du cuivre.

12. Fil électrique selon l'une quelconque ou plusieurs des revendications 10 à 11, dans lequel le revêtement possède une épaisseur de 0,1 à 1 millimètre et dans lequel le revêtement comprenant la composition thermoplastique ne présente pas de fissuration sous flexion après un vieillissement à 175°C pendant 240 heures.

13. Article comprenant le fil électrique selon l'une quelconque ou plusieurs des revendications 10 à 12, dans lequel l'article est un élément de véhicule ferroviaire, un élément d'automobile, un élément d'autobus, un élément de véhicule marin ou un élément d'aéronef.
